# EUROPEAN PATENT SPECIFICATION

(11) **EP 3 612 037 B1**
(45) Date of publication and mention of the grant of the patent: **10.03.2021**
(21) Application number: 18725638.3
(22) Date of filing: 18.04.2018
(51) Int. Cl.: A23L 3/30, A23L 5/30, B01J 19/10

(54) **MODULAR STRUCTURE OF APPARATUS FOR TREATING FLUIDS WITH ULTRASOUND AND SET OF STRUCTURES FOR SUCH TREATMENT**
MODULARE STRUKTUR EINER VORRICHTUNG ZUR BEHANDLUNG VON FLÜSSIGKEITEN MIT ULTRASCHALL UND SATZ VON STRUKTUREN FÜR SOLCH EINE BEHANDLUNG
STRUCTURE MODULAIRE D'APPAREIL DE TRAITEMENT DE FLUIDES AVEC DES ULTRASONS ET ENSEMBLE DE STRUCTURES POUR UN TEL TRAITEMENT

(30) Priority: 18.04.2017 IT 201700042440
(43) Date of publication of application: 26.02.2020
(73) Proprietor: Ecotecne S.r.l., 35015 Galliera Veneta (PD) (IT)
(72) Inventor: MARTINI, Bruno, 31100 Treviso (IT)
(74) Representative: Marchioro, Paolo
(86) International application number: PCT/IB2018/052679
(87) International publication number: WO 2018/193386

(56) References cited:
- EP-A1- 2 223 742
- EP-A1- 3 127 591
- WO-A1-2009/144007
- CN-U- 204 911 252

## Description

The invention relates to a modular structure of apparatus for the treatment of fluids with ultrasound.

The invention also relates to a set of structures of apparatus for the treatment of fluids with ultrasound.

Currently, an apparatus is known for the treatment of fluids with ultrasound, in particular for agroalimentary fluids, comprising a tubular jacket defining a conduit for a fluid being treated, which jacket has two supporting bodies, fixed integrally thereto, providing support to a plurality of generators of ultrasonic vibrations, which ultrasonic vibrations are transmitted to the jacket through the supporting bodies and through the jacket they are transmitted to the fluid, with the consequent generation of ultrasonic cavitation.

This apparatus is the subject of the European patent application EP3127591. The tubular jacket has two passage ports for the fluid being treated, for example an intake port and a discharge port.

A first supporting body is welded to the tubular jacket proximate to the intake port and the second supporting body is welded proximate to the discharge port.

The ultrasonic vibration generators determine the synchronized oscillation of the two supporting bodies and of the tubular jacket with them; this causes the generation of the phenomenon of cavitation in the fluid that flows over the tubular jacket; accordingly, the fluid that flows over such tubular jacket is affected and modified by the phenomenon.

In a preferred embodiment, said apparatus comprises two concentric tubular jackets defining a central duct and a surrounding annular duct.

The two supporting bodies for the vibration generators consist of two opposite covers arranged so as to close the annular duct and fixed to the two tubular jackets by welding.

Each one of said supporting bodies has a passage port for the fluid that passes within said annular duct, and a central opening that is crossed by said inner tubular jacket.

Said inner tubular jacket is provided at its ends with corresponding passage ports for the fluid being treated.

The two ducts, the central one and the annular one, are pre-set to be mutually connected, for example by means of a connector, so that the fluid being treated first passes through the annular duct and then is recirculated in the central duct.

In this manner, the same fluid receives the treatment provided by the apparatus in its first embodiment substantially twice consecutively.

By way of said apparatus with concentric ducts it is therefore possible to treat a larger quantity of fluid than known apparatuses and for a longer time than known apparatuses, with obvious advantages in terms of both production rates and product quality.

Although these apparatuses for treating fluids with ultrasound are well known and extremely appreciated for the quality of their performance, they do have limitations.

A first limitation is that this prior art apparatus with concentric ducts is very difficult to clean at the covers of the annular duct, because these covers, bearing the generators of ultrasonic vibrations, are welded to the two concentric jackets which define the annular ducts, and thus they are accessible for cleaning only the areas reachable through the inlet and outlet ports for the fluid which are defined on said covers.

Cleanliness of the ducts is fundamental because these apparatuses are ever more frequently applied for the treatment of liquids for human consumption, for example alcoholic beverages, flavoured drinks, sugary drinks and the like, for the production of which it is not acceptable to have possible problems with accumulation of dirt or otherwise of unplanned residues inside the ducts.

To clean these apparatuses optimally, it is necessary to make intensive use of energy and times, at each change of fluid product to be treated, to be able to eliminate the residue accumulations that are formed at the corners defined between covers and jackets, which is impractical in terms of costs.

A second limitation of these known apparatuses is that between the central tubular duct and the outer annular duct there is a cross section change, because of which the same treatment cannot be assured to all transiting fluid; moreover, each section change entails the formation of obstructions, of dead areas where stagnation may occur and hence undesired bacteria may be formed or proliferate.

A third limitation of these apparatuses with concentric ducts consists of the complexity of construction, with numerous special parts that need to be assembled and fastened with skill and attention by experienced personnel, with consequent costs in terms of components, labour and production times.

A task of the present invention is to provide a modular structure of apparatus for treating fluids with ultrasound that is capable of overcoming the aforementioned drawbacks and limitations of the prior art.

In particular, a purpose of the invention is to provide a structure of apparatus for treating fluids with ultrasound that is easy to clean without compromising its functionality.

Another purpose of the invention is to provide a modular structure of apparatus that is less complex and easier to assemble than prior art apparatuses.

Yet another purpose of the invention is to provide a set of modular structures of apparatus according to the invention.

The task and the aforesaid purposes are achieved by a structure of apparatus for treating fluids with ultrasound according to claim 1.

Further features of the modular structure of apparatus for treating fluids according to claim 1 are described in the dependent claims.

The task and the aforesaid purposes, together with the advantages that will be mentioned farther on, will be readily apparent during the description of an embodiment of the invention, which is given, by way of non-limiting indication, with reference to the accompanying drawings, where:
- figure 1 shows a schematic plan view of a modular structure of apparatus for treating fluids with ultrasound according to the invention;
- figure 2 shows a front view of a modular structure of apparatus according to the invention;
- figure 3 schematically shows a plan view of a set of modular structures of apparatus according to the invention;
- figure 4 shows a partial lateral section of a detail of a modular structure of apparatus according to the invention;
- figure 5 schematically shows a perspective view of another set of modular structures of apparatus according to the invention;
- figure 6 shows a perspective view of an additional set of modular structures according to the invention;
- figure 7 shows a detail of a different perspective view of the set of figure 6;
- figure 8 shows an example of application of a set of modular structures according to the invention;
- figure 9 shows a schematic example of modularity of a plurality of modular structures according to the invention;
- figure 10 shows another schematic example of modularity of a plurality of modular structures according to the invention;
- figure 11 shows a lateral section view of an application comprising a set of two modular structures according to the invention.

With reference to the aforementioned figures, a modular structure of apparatus for treating fluids with ultrasound according to the invention is designated in its entirety by the numeral **10.**

Said modular structure of apparatus **10** for treating fluids with ultrasound is of the type comprising at least one tubular element **11** defining a duct for a fluid being treated, there being, integrally fixed to said at least one tubular element **11,** at least one supporting body **15** for a plurality of generators of ultrasonic vibrations **17, 18** for vibrating said at least one tubular element **11,** the latter being connected to said at least one supporting body **15** so as to allow the transmission of the vibrations for the generation of ultrasonic cavitation in the fluid being treated.

The peculiarity of the invention is that said modular structure of apparatus **10** comprises at least two tubular elements, for example four tubular elements **11, 12, 13** and **14,** parallel and side by side, and fixed to at least a same supporting body, for example two supporting bodies **15** and **16.**

Each segment of tubular element fixed to a corresponding supporting body **15** and **16,** for example the segments **11a** and **11b** for a first tubular element **11,** and the segments **12a** and **12b** for a second tubular element **12,** is surrounded by at least two generators of ultrasonic vibrations, for example four generators of ultrasonic vibrations; for example four generators **17, 18, 19** and **20** surround the segment **11a** of the tubular element **11** and four generators **18, 20, 21** and **22** surround the segment **12a** of the tubular element **12.**

Each of the supporting bodies **15** and **16** then bears a number of vibration generators such that each segment of tubular element that passes through it is surrounded by at least two vibration generators, for example four vibration generators as described above.

In the embodiment of the modular structure of apparatus **10** described herein by way of non-limiting example of the invention, each supporting body **15** and **16** consists of a metallic plate with through holes shaped to be traversed by the tubular elements **11, 12, 13** and **14.**

The tubular elements **11, 12, 13** and **14** are rectilinear, i.e. straight.

Each supporting body **15** and **16** is traversed by the tubular elements in orthogonal direction to its plane of lay.

The generators of ultrasonic vibrations transmit the vibrations to the plate that bears them, and said vibrations propagate from the plate to the tubular elements.

The generators of ultrasonic vibrations emit vibrations prevalently in an orthogonal direction to the plate that bears them, i.e. in a parallel direction to the axes of the tubular elements.

Because of this specific arrangement, the tubular elements are subjected to vibrations in prevalently axial direction, i.e. in the direction of their length; in this way, each tubular element is subjected to a series of infinitesimal compressions-elongations in the axial direction, determined by the propagation of the vibrations emitted by the vibration generators; these vibrations in the axial direction determine corresponding vibrations in the radial direction that propagates concentrically on every section of each tubular element, throughout the length of each tubular element.

Each supporting body **15** and **16** is fixed to the tubular elements **15** by welding. Said welding is preferably of the type with weld bead material added on both faces of the supporting body **15** and **16.**

Each of the tubular elements **11, 12, 13** and **14** consists of a tube made of metallic material.

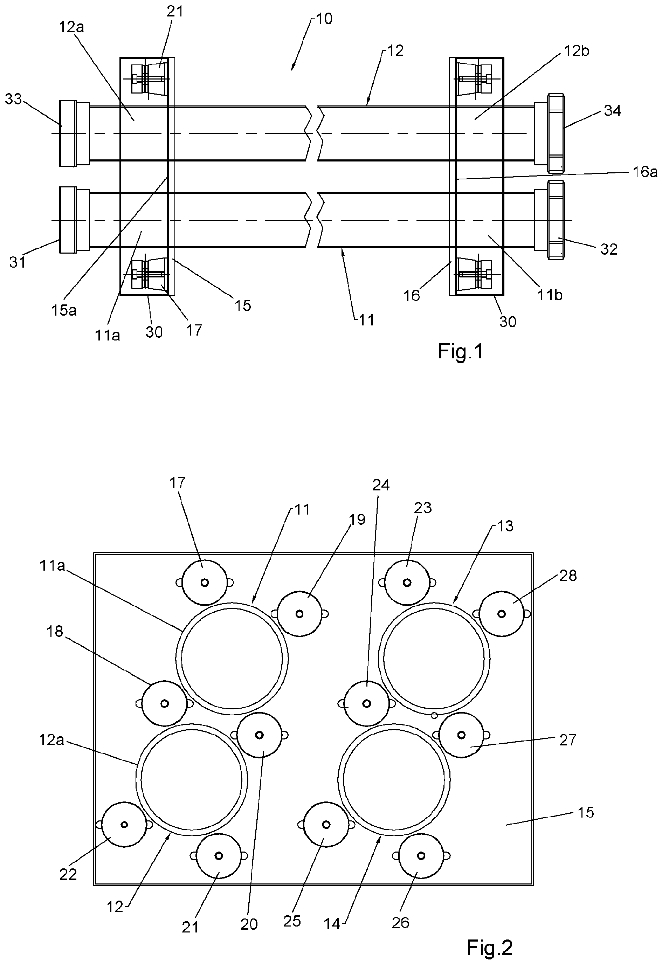

Each of the tubular elements **11, 12, 13** and **14** consists of a tube made of metallic material having the same internal diameter dimensions, so that two tubular elements connected in series do not determine any changes in section. In the present embodiment, each supporting body 15 and 16 bears twelve generators of ultrasonic vibrations **17, 18, 19, 20, 21, 22, 23, 24, 25, 26, 27** and **28,** as shown in figure 2 for a first supporting body **15.**

Some of the generators of ultrasonic vibrations borne by a supporting body **15** and **16** co-operate to surround more than one segment of tubular element; for example, as in figure 2, the generators of ultrasonic vibrations **18** and **20** located in an intermediate area between the two segments of tubular element **11a** and **12a** co-operate to surround both a first segment of tubular element **11a** and a second segment of tubular element **12a.**

Because of this positioning of the generators of ultrasonic vibrations on the respective supporting bodies, the action of the vibration generators is synergic and allows to save in the use of two or more further vibration generators.

The generators of ultrasonic vibrations borne by a same supporting body **15** and **16** are mounted on the same face of the supporting body.

The generators of ultrasonic vibrations are fixed to the respective supporting bodies **15** and **16** and are excited in such a way that their action in the axial direction on the tubular elements **11, 12, 13, 14** is added.

In the embodiment described herein, the vibration generators are fixed to the respective supporting bodies **15** and **16** on two faces, respectively **15a** and **16a,** that are opposite, in accordance with figure 1.

Each generator of ultrasonic vibrations **17, 18, 19, 20, 21, 22, 23, 24, 25, 26, 27, 28** consists of a sonotrode.

Said sonotrode is, for example, of the type operating between 20 kHz and 80 kHz.

The generators of ultrasonic vibrations borne by a same supporting body **15** and **16** are closed inside a protective casing **30** and **31** respectively, to protect them from any accidental contacts, in particular with washing liquids and with the treated liquids.

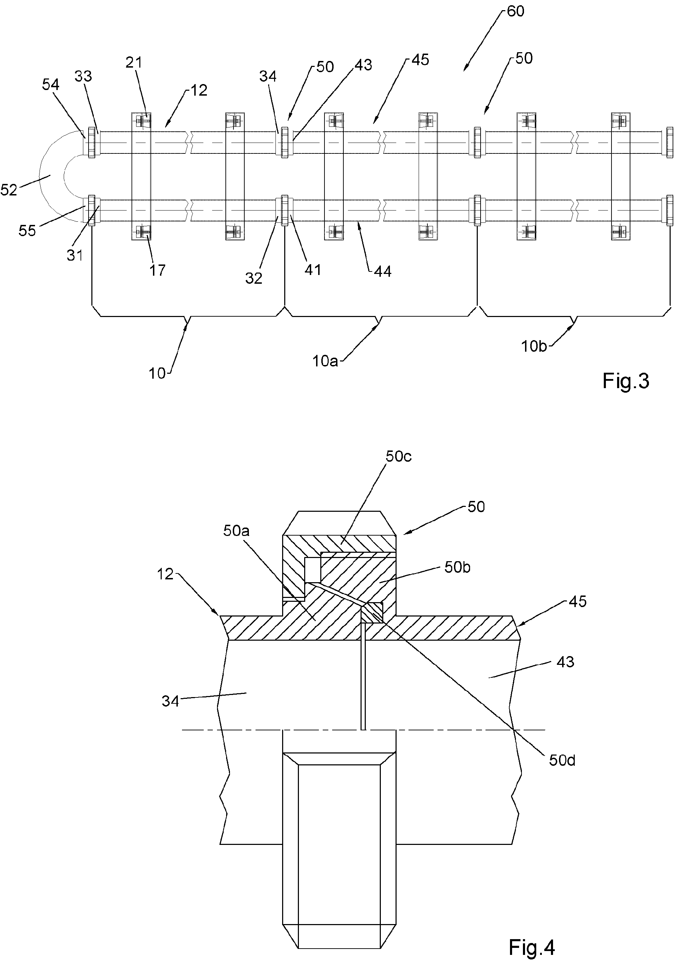

The ends of each tubular element **11, 12, 13** and **14** of a first modular structure of apparatus **10** according to the invention, for example the ends **31** and **32** of a first tubular element **11** and the ends **33** and **34** of a second tubular element **12,** can be connected with corresponding ends, for example **41** and **43,** of the tubular elements, for example **44** and **45,** of a second equal structure of apparatus **10a,** as exemplified in figure 3.

The connection between a first end **34** of a tubular element **12** of a first modular structure of apparatus **10** and a second end **43** of a tubular element **45** of a second structure of apparatus **10a** is achieved with a sealing quick coupling **50.**

Said sealing quick coupling **50** is for example of the type with male **50a** -female **50b** fittings and locking ring **50c,** with an annular gasket **50d** interposed between the two fittings, as exemplified in figure 4.

Said sealing quick coupling **50** has such internal diameter dimension as not to determine changes in section with respect to the corresponding internal diameter dimension of the tubular elements that it joins; in this way, there are no changes in section and no places are created where stagnation situations can be determined, with the accumulation of dirt and formation of bacteria.

These sealing quick couplings **50** then have equal internal diameter dimension to the corresponding internal diameter dimension of the tubular elements that they join.

Said sealing quick coupling is, for example, of a standard DIN 100 type.

Figure 3 shows three equal modular structures of apparatus for treating fluids with ultrasound **10, 10a** and **10b** connected in series to define a set for treating fluids with ultrasound **60.**

Therefore, the invention also relates to a set for treating fluids with ultrasound **60** that is characterised in that it comprises a plurality of equal modular structures of apparatus for treating fluids with ultrasound **10, 10a, 10b** joined in series.

The connection between two tubular elements of two structures of apparatus **10, 10a, 10b** arranged in series is achieved by means of sealing quick couplings **50,** as described above.

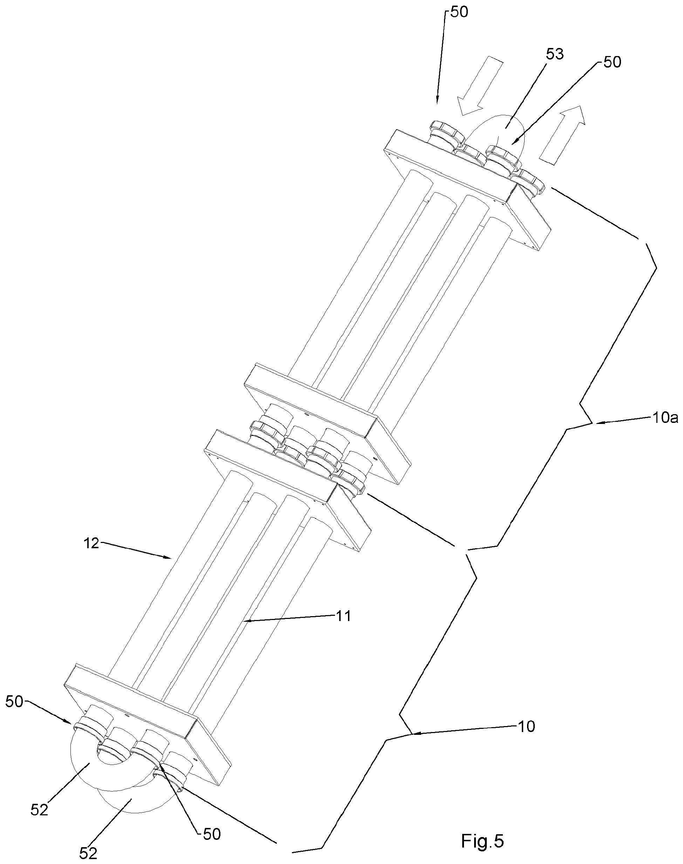

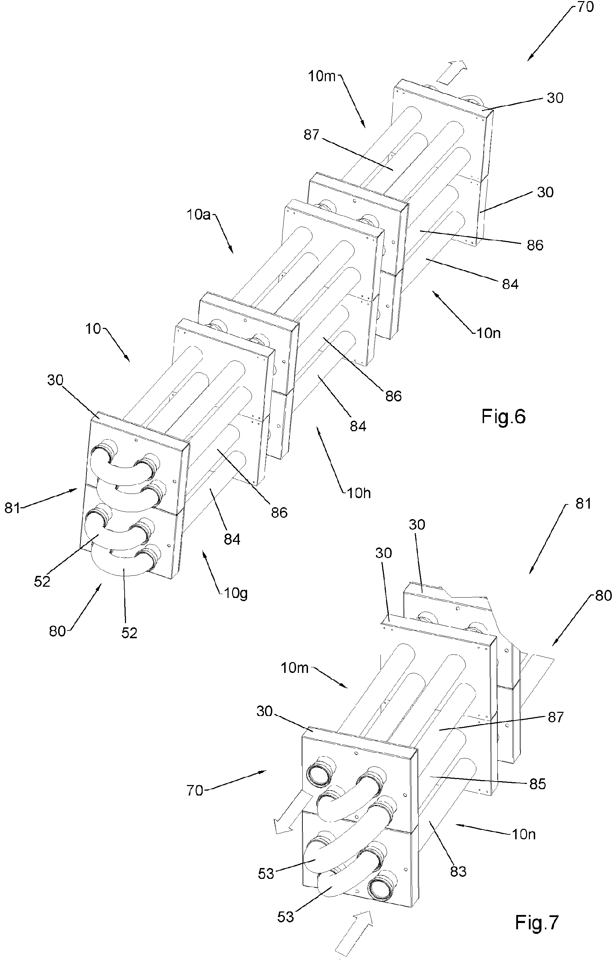

The connection between two neighbouring parallel tubular elements, belonging to the same modular structure of apparatus **10,** for example the tubular elements **11** and **12** of the structure of apparatus **10** of figures 2, 3 and 5, or belonging to two distinct modular structures of apparatus, as exemplified for the modular structures **10m** and **10n** in figure 7, is achieved with a tubular curve **52** or **53** configured to define a curve, for example of 180°, adapted to deflect the fluid treated from one tubular element to another parallel tubular element placed side by side, overlying or underlying.

Each tubular curve **52** and **53** is fixed at its ends **54** and **55** to a corresponding end of a tubular element, for example the end **33** of the tubular element **12,** and the end **31** of the tubular element **11** in figure 3, by means of respective sealing quick couplings **50.**

Each curve **52** and **53** has internal diameter dimension corresponding to the internal diameter dimension of the tubular elements that each curve connects; in this way, there are no changes in section and no places are created where stagnation situations can be determined, with the accumulation of dirt and formation of bacteria.

Figures 6 and 7 exemplify a set for treating fluids with ultrasound **70** comprising a plurality of modular structures of apparatus **10, 10a, 10m, 10g, 10h** and **10n** arranged in multiple side by side rows, for example two side by side rows **80** and **81,** of which a first, lower, row **80** comprising the modular structures of apparatus **10g, 10h** and **10n,** and a second, upper, row **81** comprising the structures of apparatus **10, 10a, 10m.**

Hereafter, the term 'line' means a plurality of coaxial tubular elements joined in series.

Such a set for treating fluids with ultrasound **70** therefore has a first incoming hydraulic line, **83,** clearly visible in figure 7, travelled in a forward direction, connected at an end thereof, by means of a tubular curve **52,** to a neighbouring second line **84** shown in figure 6, travelled in a return direction, opposite to the forward direction; the second line **84** is connected, at an opposite end, by means of a tubular curve **53,** to a third line **85,** as shown in figure 7, overlying the first line **83** and travelled in the forward direction, i.e. in the same direction as the first incoming line **83;** similarly to what is described for the first line **83,** the third line **85** is connected at an end thereof, by means of a tubular curve **52,** to a side by side fourth line **86,** travelled in a return direction.

The fourth hydraulic line **86** of the first row **80** of modular structures **10g, 10h, 10n** is connected by means of a tubular curve **53** to a first, incoming, hydraulic line, **87** of the side by side second row **81** of modular structures **10, 10a, 10m,** as shown in figures 6 and 7.

Connecting in this way the rows **80** and **81** of modular structures of apparatus according to the invention, a fluid is treated with ultrasound for a length, and hence for a time, which are specifically defined for a given result to be obtained.

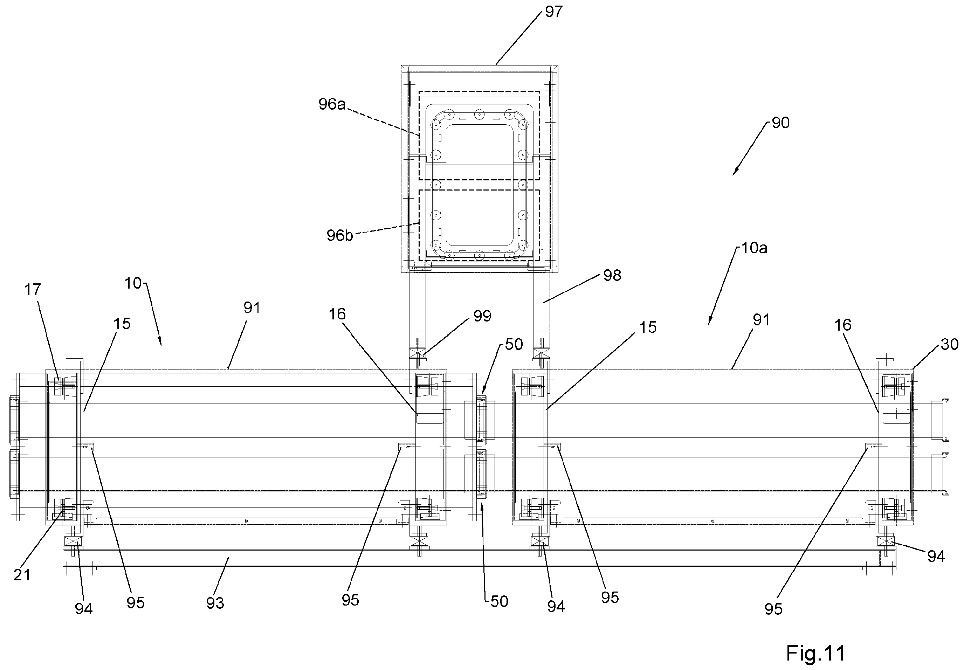

Figure 11 shows an application comprising a set **90** of two modular structures according to the invention **10** and **10a** respectively.

In this application, to be understood as exemplifying, the two modular structures **10** and **10a** are connected to each other in series by sealing quick couplings **50** as described above.

Each modular structure **10** and **10a** is enclosed, with the exception of the ends, inside a protecting container **91.**

The modular structures **10** and **10a** lie on a load-bearing frame **93** by interposition of corresponding vibration dampers **94.**

The supporting bodies **15** and **16** centrally present a through hole with a tubular segment **95;** each of these tubular segments is fixed to the respective supporting body **15** and **16,** for examples by welding, so as to project towards the interior of the protecting container **91.**

The tubular segments **95** of a modular structure, **10** like **10a,** are connected by a flexible tube, for example made of rubber, not shown for the sake of simplicity, and with said flexible tube they define a protected passage for the electric cables for powering and controlling the generators of ultrasonic vibrations **17,18,19, 20, 21, 22, 23, 24, 25, 26, 27** and **28.**

The modular structure **10** and **10a** can also comprise one or more temperature sensors, for example a first temperature sensor for monitoring the temperature of the supporting bodies **15** and **16,** i.e. metal plates, and possibly a second temperature sensor, for monitoring the temperature of one end of a tubular element.

The connecting cables of said one or more temperature sensors with an electronic unit for controlling and managing the set **90,** not shown for the sake of simplicity and to be understood to be of a known type, are arranged to pass inside the flexible tube and the opposite tubular segments **95** to which it is connected.

The vibration generators of a modular structure **10,** like **10a,** are connected to a respective control and power supply unit, for example a first control and power supply unit **96a** for a first modular structure **10,** and a second control and power supply unit **96b** for a second modular structure **10a.**

In the present embodiment example of figure 11, the control and power supply units **96a** and **96b** are borne and contained in a case **97** in turn mounted on a supporting frame **98** fixed between two neighbouring supporting bodies **15** and **16** by means of vibration dampers **99.**

The case **97** has a front door and a rear door.

The protecting casings **30** for generators of ultrasonic vibrations are provided with an opening for discharging condensation, defined in the part of the casing **30** oriented downwards when in use.

These openings for discharging condensation are protected internally to the casing **30** by a bulkhead configured to allow the outflow of the accumulated liquids, but not the inflow of any external liquids, a situation that can occur for example in case of washing by means of pressure washers or other water jet means.

One of the casings **30** of each modular structure **10,** for example the casing **30** positioned at the side of the female fittings, is provided with a watertight multi-pole plug, which allows the modular structure **10** to be interfaced with the corresponding control and power supply unit **96a.**

Through said multi-pole plug are also exported the signals of the temperature sensors, where present.

Said multi-pole plugs are also adapted for remote control of both the power supply units and the temperature sensors.

In this way, a modular structure, or a set of modular structures, can also be managed remotely with a standard protocol.

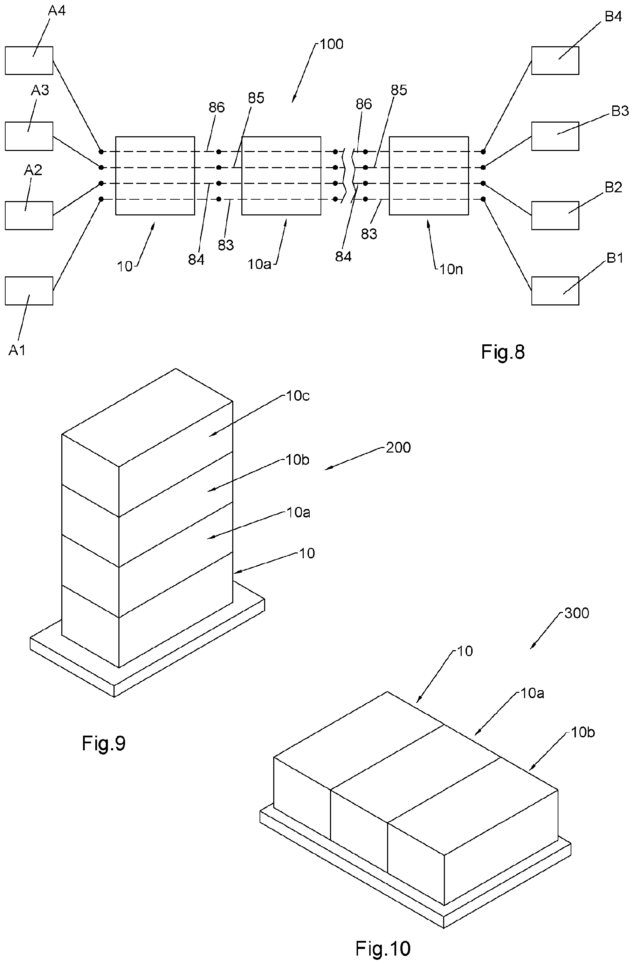

Figure 8 shows an application example of a set of modular structures **100,** comprising a plurality of modular structures **10, 10a, 10n** mutually connected in series so as to define a plurality of treatment hydraulic lines **83, 84, 85** and **86** independent from each other.

For example, a first treatment line **83** is interposed between a container for collecting and shaking of a first type of grape **A1** and a first reservoir for collecting the treated liquid **B1,** a second treatment line **84** is interposed between a collecting and shaking container for a second different type of grape **A2** and a second collecting reservoir **B2;** similarly for the shaking containers **A3** and **A4** and the corresponding tanks **B3** and **B4** by interposition of the treatment lines respectively **85** and **86.**

Thanks to this set of modular structures **100,** four different types of grapes are treated simultaneously.

Figure 9 shows a set of modular structures **200,** in which the modular structures that constitute it, for example the modular structures **10, 10a, 10b, 10c,** are superposed one over the other to define a stack, interconnected to each other in series.

Figure 10 shows a set of modular structures **300,** in which the modular structures that constitute it, for example the modular structures **10, 10a, 10b,** are side by side to each other and interconnected to each other in series.

A set of equal modular structures as described above should then be understood to be able to be put together by joining said modular structures according to three mutually orthogonal directions, according to technical needs and requirements.

In practice, it has been observed that the invention achieves its task and intended purposes.

In particular, the invention provides a modular structure of apparatus for treating fluids with ultrasound that can easily be cleaned without compromising its functionality, by virtue of the simplicity of connection between the ends of the tubular elements of a modular structure of apparatus with the corresponding ends of the tubular elements of another equal modular structure of apparatus, and of the equally simple removability and restorability of the tubular curves that mutually connect the parallel tubular elements set side by side.

Indeed, removing the tubular curves and possibly separating the modular structures of apparatus connected in series it is possible to access inside each of the tubular elements, to achieve in a convenient, well verifiable manner a deep, complete and safe cleaning thereof.

The same advantages deriving from the easy and rapid separation of the tubular curves and of the tubular elements joined together are reflected on the emptying of a treatment set, when required.

Moreover, with the invention a modular structure has been provided whose tubular elements are free of section variations, even in any tubular curves, so that there are neither stagnation areas nor dead areas where bacteria can proliferate.

Furthermore, with the invention a modular structure of apparatus is provided that is less complex and easier to assemble than prior art apparatuses.

In addition, with the invention a set of modular structures of apparatus according to the invention has been provided, with very high versatility of application, able to be put together in a simple, quick manner according to contingent technical needs and requirements.

The invention thus conceived is susceptible to numerous modifications and variants, without departing from the scope of the invention; moreover, all details can be replaced with other technically equivalent elements.

In practice, the components and materials used, provided they are compatible with the specific use, as well as the contingent dimensions and shapes, may be any depending on the needs and on the state of the art.

Where the features and the techniques mentioned in any claim are followed by reference signs, such reference signs shall be understood to be affixed solely for the purpose of enhance the intelligibility of the claims and consequently such reference signs have no limiting effect on the interpretation of each element identified by way of example by said reference signs.

## Claims

1. Modular structure of apparatus (10) for treating fluids with ultrasound, of the type comprising at least one tubular element (11) defining a duct for a fluid being treated, fixed integrally to said at least one tubular element (11), at least one supporting body (15) for a plurality of generators of ultrasonic vibrations (17, 18) for the vibration of said at least one tubular element (11) being present, the latter being connected to said supporting body (15) so as to allow the transmission of the vibrations for the generation of ultrasonic cavitation in the fluid being treated, said structure of apparatus (10) being **characterised in that** it comprises at least two tubular elements (11, 12), parallel and set side by side, and fixed to at least a same supporting body (15), each segment (11a) of tubular element (11) fixed to a corresponding supporting body (15) being surrounded by at least two generators of ultrasonic vibrations (17, 18).

2. Modular structure according to claim 1, which is **characterised in that** it comprises four tubular elements (11, 12, 13, 14), parallel and set side by side, and fixed to two supporting bodies (15, 16).

3. Modular structure according to one or more of the preceding claims, which is **characterised in that** each segment (11a, 11b, 12a, 12b) of tubular element (11, 12) fixed to a corresponding supporting body (15, 16) is surrounded by two or more generators of ultrasonic vibrations (17, 18, 19, 20).

4. Modular structure according to one or more of the preceding claims, which is **characterised in that** each supporting body (15, 16) consists of a metal plate with through holes shaped to be traversed by the tubular elements (11, 12, 13, 14).

5. Modular structure according to one or more of the preceding claims, which is **characterised in that** each supporting body (15, 16) is traversed by the tubular elements in the orthogonal direction to its plane of lay.

6. Modular structure according to one or more of the preceding claims, which is **characterised in that** some of the generators of ultrasonic vibrations borne by a supporting body (15, 16) co-operate to surround more than one segment of tubular element.

7. Modular structure according to one or more of the preceding claims, which is **characterised in that** the ends (31, 32, 33, 34) of each tubular element (11, 12, 13, 14) of a first structure of apparatus (10) are connectable with corresponding ends (41, 43) of the tubular elements (44, 45) of a second equal structure of apparatus (10a).

8. Modular structure according to one or more of the preceding claims, which is **characterised in that** the connection between a first end (34) of a tubular element (12) of a first modular structure of apparatus (10) and a second end (46) of a tubular element (45) of a second modular structure of apparatus (10a) is achieved with a sealing quick coupling (50).

9. Structure according to one or more of the preceding claims, which is **characterised in that** the connection between two neighbouring parallel tubular elements, belonging to the same modular structure of apparatus (10), or belonging to two distinct modular structures of apparatus (10m, 10n), is achieved with a tubular curve (52, 53) configured to define a curve adapted to deflect the treated fluid from a tubular element to another parallel tubular element placed side by side, overlying or underlying.

10. Set for treating fluids with ultrasound (60) which is **characterised in that** it comprises a plurality of equal modular structures of apparatus for treating fluids with ultrasound (10, 10a, 10b) according to one or more of the preceding claims, joined in series.

## Patentansprüche

1. Modulare Struktur einer Vorrichtung (10) zur Behandlung von Fluiden mit Ultraschall, des Typs umfassend mindestens ein Röhrenelement (11), das eine Leitung für ein behandeltes Fluid definiert, die einstückig an dem mindestens einen Röhrenelement (11) befestigt ist; mindestens einen Stützkörper (15) für eine Vielzahl von Ultraschall-Schwingungserzeugern (17, 18) für die Schwingung des mindestens einen vorhandenen Röhrenelements (11); wobei letzteres mit dem Stützkörper (15) so verbunden ist, dass die Übertragung der Schwingungen zur Erzeugung von Ultraschallkavitation in dem behandelten Fluid möglich ist; die Struktur der Vorrichtung (10) **dadurch gekennzeichnet ist, dass** sie mindestens zwei Röhrenelemente (11, 12) umfasst, die parallel und nebeneinander angeordnet und mindestens an demselben Stützkörper (15) befestigt sind, wobei jedes Segment (11a) des an einem entsprechenden Stützkörper (15) befestigten Röhrenelements (11) von mindestens zwei Ultraschall-Schwingungserzeugern (17, 18) umgeben ist.

2. Modulare Struktur nach Anspruch 1, die **dadurch gekennzeichnet ist, dass** sie vier Röhrenelemente (11, 12, 13, 14) umfasst, die parallel und nebeneinander angeordnet und an zwei Stützkörpern (15, 16) befestigt sind.

3. Modulare Struktur nach einem oder mehreren der vorhergehenden Ansprüche, die **dadurch gekennzeichnet ist, dass** jedes Segment (11a, 11b, 12a, 12b) des Röhrenelements (11, 12), das an einem entsprechenden Stützkörper (15, 16) befestigt ist, von zwei oder mehr Ultraschall-Schwingungserzeugern (17, 18, 19, 20) umgeben ist.

4. Modulare Struktur nach einem oder mehreren der vorhergehenden Ansprüche, die **dadurch gekennzeichnet ist, dass** jeder Stützkörper (15, 16) aus einer Metallplatte mit Durchgangslöchern besteht, die so geformt sind, dass sie von den Röhrenelementen (11, 12, 13, 14) durchquert werden.

5. Modulare Struktur nach einem oder mehreren der vorhergehenden Ansprüche, die **dadurch gekennzeichnet ist, dass** jeder Stützkörper (15, 16) von den Röhrenelementen in orthogonaler Richtung zu seiner Lageebene durchquert wird.

6. Modulare Struktur nach einem oder mehreren der vorhergehenden Ansprüche, die **dadurch gekennzeichnet ist, dass** einige der von einem Stützkörper (15, 16) getragenen Ultraschall-Schwingungserzeuger zusammenarbeiten, um mehr als ein Segment des Röhrenelements zu umgeben.

7. Modulare Struktur nach einem oder mehreren der vorhergehenden Ansprüche, die **dadurch gekennzeichnet ist, dass** die Enden (31, 32, 33, 34) jedes Röhrenelements (11, 12, 13, 14) einer ersten Struktur der Vorrichtung (10) mit entsprechenden Enden (41, 43) der Röhrenelemente (44, 45) einer zweiten gleichen Struktur der Vorrichtung (10a) verbindbar sind.

8. Modulare Struktur nach einem oder mehreren der vorhergehenden Ansprüche, die **dadurch gekennzeichnet ist, dass** die Verbindung zwischen einem ersten Ende (34) eines Röhrenelements (12) einer ersten modularen Struktur der Vorrichtung (10) und einem zweiten Ende (46) eines Röhrenelements (45) einer zweiten modularen Struktur der Vorrichtung (10a) durch einen Schnellkupplungsverschluss (50) erreicht wird.

9. Struktur nach einem oder mehreren der vorhergehenden Ansprüche, die **dadurch gekennzeichnet ist, dass** die Verbindung zwischen zwei benachbarten parallelen Röhrenelementen, die zu derselben modularen Struktur der Vorrichtung (10) gehören, oder zu zwei unterschiedlichen modularen Strukturen der Vorrichtung (10m, 10n) gehören, durch eine Röhrenkurve (52, 53) erreicht wird, die konfiguriert ist, um eine Kurve zu definieren, die dazu angepasst ist, das behandelte Fluid von einem Röhrenelement zu einem anderen parallelen Röhrenelement abzulenken, das nebeneinander, darüber- oder darunter liegend angeordnet ist.

10. Satz zur Behandlung von Fluiden mit Ultraschall (60), der **dadurch gekennzeichnet ist, dass** er eine Vielzahl von gleichen modularen Strukturen der Vorrichtung zur Behandlung von Fluiden mit Ultraschall (10, 10a, 10b) gemäß einem oder mehreren der vorhergehenden Ansprüche umfasst, die in Reihe geschaltet sind, umfasst.

## Revendications

1. Structure modulaire d'appareil (10) pour le traitement de fluides par ultrasons, du type comprenant au moins un élément tubulaire (11) définissant un conduit pour un fluide en cours de traitement, fixé de manière solidaire audit au moins un élément tubulaire (11), au moins un corps de support (15) pour une pluralité de générateurs de vibrations ultrasonores (17, 18) pour la vibration dudit au moins un élément tubulaire (11) étant présent, ce dernier étant connecté audit corps de support (15) de façon à permettre la transmission des vibrations pour la génération de cavitation ultrasonore dans le fluide en cours de traitement, ladite structure d'appareil (10) étant **caractérisée en ce qu'**elle comprend au moins deux éléments tubulaires (11, 12), parallèles et installés côte à côte, et fixés à au moins un même corps de support (15), chaque segment (11a) d'élément tubulaire (11) fixé à un corps de support (15) correspondant étant entouré d'au moins deux générateurs de vibrations ultrasonores (17, 18).

2. Structure modulaire selon la revendication 1, qui est **caractérisée en ce qu'**elle comprend quatre éléments tubulaires (11, 12, 13, 14) parallèles et installés côte à côte, et fixés à deux corps de support (15, 16).

3. Structure modulaire selon l'une ou plusieurs des revendications précédentes, qui est **caractérisée en ce que** chaque segment (11a, 11b, 12a, 12b) d'élément tubulaire (11, 12) fixé à un corps de support (15, 16) correspondant est entouré de deux ou plusieurs générateurs de vibrations ultrasonores (17, 18, 19, 20).

4. Structure modulaire selon l'une ou plusieurs des revendications précédentes, qui est **caractérisée en ce que** chaque corps de support (15, 16) est constitué d'une plaque métallique avec des trous traversants conformés pour être traversés par les éléments tubulaires (11, 12, 13, 14).

5. Structure modulaire selon l'une ou plusieurs des revendications précédentes, qui est **caractérisée en ce que** chaque corps de support (15, 16) est traversé par les éléments tubulaires dans la direction orthogonale à son plan de pose.

6. Structure modulaire selon l'une ou plusieurs des revendications précédentes, qui est **caractérisée en ce que** certains des générateurs de vibrations ultrasonores portés par un corps de support (15, 16) coopèrent pour entourer plus d'un segment d'élément tubulaire.

7. Structure modulaire selon l'une ou plusieurs des revendications précédentes, qui est **caractérisée en ce que** les extrémités (31, 32, 33, 34) de chaque élément tubulaire (11, 12, 13, 14) d'une première structure d'appareil (10) sont connectables avec des extrémités (41, 43) correspondantes des éléments tubulaires (44, 45) d'une deuxième structure d'appareil (10a) égale.

8. Structure modulaire selon l'une ou plusieurs des revendications précédentes, qui est **caractérisée en ce que** la connexion entre la première extrémité (34) d'un élément tubulaire (12) d'une première structure modulaire d'appareil (10) et une deuxième extrémité (46) d'un élément tubulaire (45) d'une deuxième structure modulaire d'appareil (10a) est obtenue avec un raccord rapide étanche (50).

9. Structure selon l'une ou plusieurs des revendications précédentes, qui est **caractérisée en ce que** la connexion entre deux éléments tubulaires parallèles voisins, appartenant à la même structure modulaire d'appareil (10), ou appartenant à deux structures modulaires d'appareil (10m, 10n) distinctes, est obtenue avec une courbe tubulaire (52, 53) configurée pour définir une courbe apte à dévier le fluide traité d'un élément tubulaire à un autre élément tubulaire parallèle placé côte à côte, au-dessus ou au-dessous.

10. Ensemble pour le traitement de fluides par ultrasons (60) qui est **caractérisé en ce qu'**il comprend une pluralité de structures modulaires d'appareil égales pour le traitement de fluides par ultrasons (10, 10a, 10b) selon l'une ou plusieurs des revendications précédentes, réunies en série.
